# FASCICULE DE BREVET EUROPEEN

(11) **EP 1 949 385 B1**
(45) Date de publication et mention de la délivrance du brevet: **10.08.2011**
(21) Numéro de dépôt: 06831118.2
(22) Date de dépôt: 14.11.2006
(51) Int. Cl.: G21C 15/22, G21D 1/02, G21C 13/032, B01F 3/08, B01F 5/06, F15D 1/02

(54) **CIRCUIT PRIMAIRE DE REACTEUR NUCLEAIRE**
PRIMÄRKREIS EINES KERNREAKTORS
NUCLEAR REACTOR PRIMARY CIRCUIT

(30) Priorité: 18.11.2005 FR 0511724
(43) Date de publication de la demande: 30.07.2008
(73) Titulaire: Areva NP, 92400 Courbevoie (FR)
(72) Inventeur: BAROIS, Guy, F-38660 St Pancrasse (FR); ALIBAUD, Jean-Georges, F-75008 Paris (FR); MULLER, Thierry, F-71390 St Helene (FR); DUMEZ, Christelle, F-91600 Savigny sur Orge (FR)
(74) Mandataire: Domenego, Bertrand
(86) Numéro de dépôt international: PCT/FR2006/002520
(87) Numéro de publication internationale: WO 2007/057559

(56) Documents cités:
- EP-A- 0 158 544
- WO-A-94/00226
- US-A- 4 168 071
- US-A- 5 785 361
- US-B1- 6 708 651
- PATENT ABSTRACTS OF JAPAN vol. 1995, no. 04, 31 mai 1995 (1995-05-31) & JP 07 027300 A (HITACHI LTD), 27 janvier 1995 (1995-01-27)
- PATENT ABSTRACTS OF JAPAN vol. 1998, no. 03, 27 février 1998 (1998-02-27) & JP 09 304583 A (MITSUBISHI HEAVY IND LTD), 28 novembre 1997 (1997-11-28)

## Description

L'invention concerne en général les réacteurs nucléaires.

Plus précisément, l'invention concerne, selon un premier aspect, un circuit primaire de réacteur nucléaire, du type comprenant :
- une tuyauterie primaire délimitant un volume intérieur dans lequel circule un fluide primaire de refroidissement du réacteur nucléaire, ledit fluide primaire circulant de l'amont vers l'aval de la tuyauterie primaire ;
- une tuyauterie annexe piquée sur la tuyauterie primaire, la tuyauterie annexe délimitant un volume interne communiquant avec le volume intérieur de la tuyauterie primaire ;
- une manchette s'étendant au moins partiellement à l'intérieur de la tuyauterie annexe, cette manchette présentant une première extrémité liée à la tuyauterie annexe, et une seconde extrémité libre située dans le volume intérieur de la tuyauterie primaire.

Le document FR-A-2 561 030 décrit un tel circuit. Ce circuit comprend une manchette s'arrêtant au ras de la tuyauterie primaire. La manchette peut également s'arrêter légèrement en retrait, ou encore pénétrer dans celle-ci sur une faible profondeur.

WO-94/00 226 et US-6708 651 décrivent l'un et l'autre des raccordements de tuyauteries dans lesquels des précautions sont prises pour limiter les contraintes d'origine thermique provenant de la différence entre les températures de deux fluides qui se mélangent.

La tuyauterie annexe mentionnée ci-dessus est typiquement utilisée pour raccorder la partie de charge du circuit Réacteur Contrôle Volume (RCV) sur le circuit primaire. Cette tuyauterie est piquée sur la branche froide du circuit primaire, c'est-à-dire sur la partie de ce circuit située en amont de la cuve du réacteur nucléaire et reliant la pompe de circulation du fluide primaire à une des entrées de la cuve. La tuyauterie annexe permet d'injecter des charges de liquide venant du RCV dans le circuit primaire, de façon à ajuster à la hausse le volume de liquide primaire circulant dans celui-ci, ou modifier la chimie du circuit primaire.

Les charges de liquide injectées sont plus froides que le liquide primaire circulant dans le circuit primaire. La tuyauterie primaire au droit de la zone de mélange entre le liquide venant du circuit RCV et le liquide primaire subit donc des variations de température de grandes amplitudes quand on réalise une injection par la ligne de charge à l'intérieur du circuit primaire. De plus le piquage de la tuyauterie annexe sur la tuyauterie primaire subit des fluctuations thermiques importantes, qui ont lieu lorsque la différence de température entre la charge et la branche froide est importante. Ces sollicitations peuvent entraîner une fatigue de cette zone de la tuyauterie primaire, qui peut augmenter les risques de fuite ou de rupture au niveau du piquage.

Dans ce contexte, l'invention vise à proposer un circuit primaire de réacteur nucléaire dans lequel le risque de fatigue et de fuite au niveau du piquage de la tuyauterie annexe sur la tuyauterie primaire est très largement diminué voire supprimé.

A cet effet, l'invention vise un circuit primaire du type décrit ci-dessus, caractérisé en ce que l'extrémité de la manchette est délimitée par un bord périphérique libre présentant au moins des secteurs amont et aval tournés respectivement vers l'amont et l'aval de la tuyauterie primaire, le secteur amont pénétrant plus profondément dans le volume intérieur à partir de la tuyauterie primaire que le secteur aval.

Le circuit primaire peut également présenter une ou plusieurs des caractéristiques ci-dessous, considérées individuellement ou selon toutes les combinaisons techniquement possibles :
- les secteurs amont et aval pénètrent dans le volume intérieur respectivement sur des première et seconde profondeurs moyennes de pénétration, la première profondeur étant supérieure à la seconde d'au moins 10% de la plus grande dimension de la section droite de la tuyauterie annexe ;
- la première profondeur moyenne de pénétration est supérieure à 50% de la plus grande dimension de la section droite de la manchette au niveau de son extrémité libre ;
- le bord périphérique présente un profil en biseau ;
- le bord périphérique présente un profil en créneau ;
- le secteur amont s'étend sur au moins 30% du bord périphérique ;
- la manchette comprend un étranglement se terminant par l'extrémité libre, l'étranglement présentant une section de passage plus petite que celle de la tuyauterie annexe ;
- l'étranglement s'étend entre une restriction formée dans la manchette et la seconde extrémité libre, la restriction étant ménagée dans la zone de raccordement de la manchette sur la tuyauterie annexe ; et
- la plus grande dimension de la section de passage de la tuyauterie annexe est comprise entre 1,7 et 3 fois la plus grande dimension de la section de passage de l'étranglement.
   Selon un second aspect, l'invention concerne un réacteur nucléaire à eau pressurisée comprenant
- une cuve destinée à contenir des assemblages de combustible nucléaire, cette cuve étant pourvue d'au moins une entrée et une sortie,
- un circuit primaire comprenant au moins une branche froide connectée à l'entrée de la cuve et une branche chaude connectée à la sortie de la cuve,
   caractérisé en ce que le circuit primaire est un circuit primaire tel que décrit ci-dessus.

Le réacteur nucléaire peut également présenter une ou plusieurs des caractéristiques ci-dessous, considérées individuellement ou selon toutes les combinaisons techniquement possibles :
- la tuyauterie annexe est connectée à un circuit apte à injecter une charge de liquide dans la tuyauterie primaire par ladite tuyauterie annexe, la tuyauterie annexe étant piquée dans la branche froide du circuit primaire ; et
- le réacteur comprend un pressuriseur apte à faire varier de manière contrôlée la pression du fluide primaire dans le circuit primaire, la tuyauterie annexe mettant en communication le pressuriseur et la tuyauterie primaire et étant piquée sur la branche chaude du circuit primaire ;

D'autres caractéristiques et avantages de l'invention ressortiront de la description qui en est donnée ci-dessous, à titre indicatif et nullement limitatif, en référence aux figures annexée, parmi lesquelles :
- la figure 1 est une représentation schématique générale de la partie primaire d'un réacteur nucléaire à eau pressurisée selon l'invention ;
- la figure 2 est une vue en coupe, agrandie, d'un détail Il de la figure 1, montrant l'interface entre la tuyauterie de charge connectée au circuit RCV et la tuyauterie primaire ;
- la figure 3 est une vue en coupe longitudinale de la manchette de protection de la tuyauterie de charge, considérée suivant l'incidence des flèches III de la figure 2 ; et
- la figure 4 est une vue agrandie de l'extrémité libre de la manchette pour une variante de réalisation de l'invention, considérée en coupe dans le même plan que sur la figure 2.

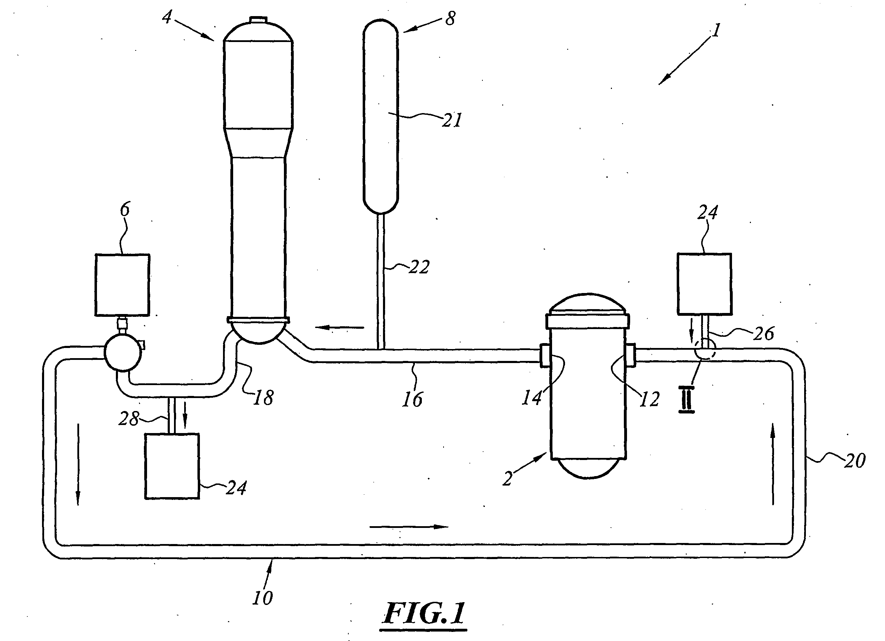

Le réacteur nucléaire 1 représenté partiellement sur la figure 1 comprend une cuve 2 contenant des assemblages de combustible nucléaire, un générateur de vapeur 4, une pompe primaire 6, un pressuriseur 8 et un circuit primaire 10. La cuve 2 est pourvue d'au moins une entrée 12 et une sortie 14. Le circuit primaire 10 comprend une branche chaude 16 reliant la sortie 14 de la cuve 2 au générateur de vapeur 4, une branche en U 18 reliant le générateur de vapeur 4 à la pompe primaire 6, et une branche froide 20 reliant la pompe 6 à l'entrée 12 de la cuve 2.

Le circuit primaire 10 contient un fluide primaire, typiquement de l'eau, circulant en circuit fermé. Le fluide primaire est refoulé par la pompe primaire 6 jusqu'à la cuve 2, traverse cette cuve en s'échauffant au contact des assemblages de combustible nucléaire, puis cède sa chaleur à un fluide secondaire circulant dans un circuit secondaire (non représenté) en passant dans le générateur de vapeur 4.

Le pressuriseur 8 est principalement formé d'une enveloppe chaudronnée étanche 21, en communication avec le volume intérieur de la branche chaude 16 par l'intermédiaire d'une tuyauterie 22 piquée sur cette branche chaude 16. L'enveloppe 21 est partiellement remplie par le fluide primaire, le ciel au sommet de cette enveloppe 21 étant occupé par de la vapeur d'eau sous pression en équilibre hydrostatique avec le fluide primaire. Le pressuriseur 8 comprend par ailleurs des moyens (non représentés) pour faire varier de manière contrôlée la pression de la vapeur d'eau dans le ciel de l'enveloppe 21, de manière à ajuster la pression du fluide primaire dans le circuit 10.

Le réacteur comprend également un circuit 24 appelé Réacteur Contrôle Volume et Chimique (RCV), représenté de manière schématique sur la figure 1. Le circuit RCV est apte à faire varier de manière contrôlée le volume de fluide primaire en circulation dans le circuit 10, en injectant des charges de fluide dans le circuit primaire, ou en soutirant des charges de fluide hors de ce circuit. A cet effet, le circuit primaire 10 comprend une tuyauterie de charge 26 raccordée au circuit RCV 24 et piquée sur la branche froide 20 du circuit primaire 10.

Le circuit primaire 10 comprend également une tuyauterie de soutirage 28 piquée au point bas de la branche en U 18 du circuit primaire 10.

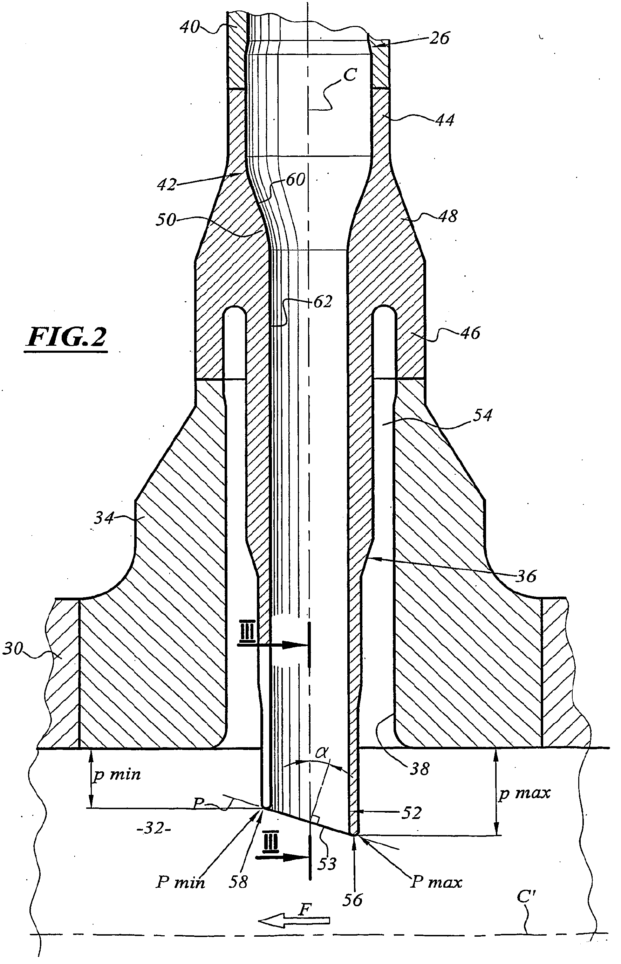

L'interface entre la tuyauterie de charge 26 et la branche froide 20 du circuit primaire est illustrée sur la figure 2. La branche froide 20 comprend une tuyauterie primaire cylindrique 30 délimitant un volume intérieur 32 dans lequel circule le fluide primaire, ledit fluide circulant de l'amont de la tuyauterie primaire, c'est-à-dire de la pompe 6, vers l'aval de la tuyauterie primaire, c'est-à-dire vers l'entrée 12 de la cuve 2. L'axe central C' de la tuyauterie primaire 30 est horizontal sur la figure 2. Le circuit comprend également un piquage 34 de raccordement de la tuyauterie de charge 26 à la tuyauterie primaire 30, et une manchette interne 36 de protection.

Le piquage 34 est soudé dans un orifice de la tuyauterie 30, et définit intérieurement un canal 38 se branchant sensiblement perpendiculairement à partir du volume intérieur 32 de la tuyauterie 30. Le canal 38 est sensiblement cylindrique. Il met en communication le volume interne de la tuyauterie de charge 26 avec le volume intérieur 32 de la tuyauterie primaire 30.

La tuyauterie de charge 26 comprend une partie principale 40 sensiblement cylindrique, de diamètre interne réduit par rapport au diamètre interne du canal 38, et une partie intermédiaire 42 interposée entre la partie principale 40 et le piquage 34.

La partie intermédiaire 42, la partie principale 40 et le canal 38 sont coaxiaux, d'axe central C vertical perpendiculaire à l'axe C' de la tuyauterie primaire 30 ou incliné à 30° par rapport à l'axe vertical perpendiculaire à l'axe de la tuyauterie primaire 30.

La partie intermédiaire 42 comprend un tronçon supérieur cylindrique 44 soudé à la partie principale 40, un tronçon inférieur 46 cylindrique soudé au piquage 34, et un tronçon intermédiaire 48 tronconique reliant les tronçons supérieur et inférieur, et présentant une forme qui s'évase à partir du tronçon supérieur vers le tronçon inférieur.

La manchette 36 présente une forme générale cylindrique, d'axe central C. Elle présente une première extrémité 50 solidaire des faces interne et externe de la tuyauterie de charge 26. Cette première extrémité 50 présente une augmentation d'épaisseur avec une partie interne du tronçon tronconique 48. La manchette 36 s'étend, de manière sensiblement rectiligne à partir de cette première extrémité 50 jusqu'à une seconde extrémité 52 libre située dans le volume intérieur 32 de la tuyauterie primaire 30. La manchette 36 s'étend donc à l'intérieur du tronçon 46 et du canal interne 38. Elle présente un diamètre extérieur réduit par rapport au tronçon 46 et au canal interne 38, de telle sorte qu'une zone annulaire 54 est délimitée entre la manchette 36, d'une part, et le tronçon 46 et le piquage 34, d'autre part. Cette zone 54 est ouverte vers le bas de la figure 2 et débouche dans le volume intérieur 32 de la tuyauterie primaire 30. Elle est fermée vers le haut de la figure 2, par la zone de jonction entre la manchette 36 et le piquage 34.

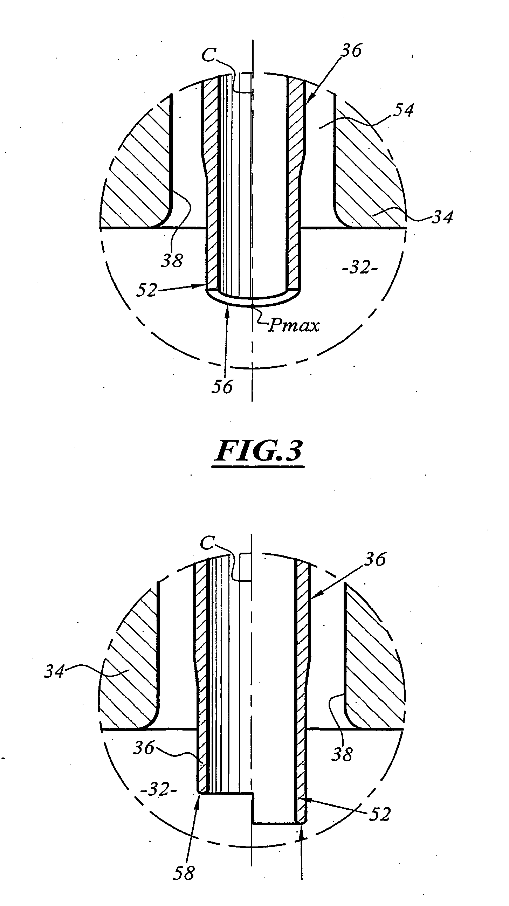

La seconde extrémité 52 de la manchette est délimitée par un bord périphérique libre 53 présentant un profil en biseau. Comme on le voit sur les figures 2 et 3, ce bord périphérique présente des secteurs amont et aval 56 et 58, tournés respectivement vers l'amont et vers l'aval de la tuyauterie primaire 30. Le sens de circulation du fluide primaire est représenté par la flèche F de la figure 2.

Du fait que le bord périphérique 53 est taillé en biseau, le secteur amont 56 du bord périphérique pénètre plus profondément dans le volume intérieur 32 de la tuyauterie primaire que le secteur aval 58.

On appelle ici profondeur de pénétration d'un point du bord périphérique 53, la distance séparant ce point de l'ouverture du canal 38 débouchant dans le volume intérieur 32, cette distance étant prise sensiblement radialement par rapport à l'axe central C de la tuyauterie primaire 30.

Dans l'exemple de réalisation illustré ici, le bord périphérique 53 de la manchette s'inscrit dans un plan incliné P (figure 2). La normale à ce plan forme un angle α d'environ 20° par rapport à l'axe C de la manchette. Le plan P est incliné vers l'amont, de telle sorte que le point Pₘₐₓ du bord périphérique 53 pénétrant le plus profondément dans le volume intérieur 32 est celui situé le plus en amont. Le point Pₘᵢₙ du bord périphérique 53 pénétrant le moins profondément est celui situé le plus en aval, diamétralement à l'opposé du point Pₘₐₓ.

Dans le présent exemple de réalisation, la pénétration pₘₐₓ au point Pₘₐₓ est sensiblement égale au diamètre interne de la manchette 36. La différence entre la pénétration au point Pₘₐₓ et la pénétration Pₘᵢₙ au point Pₘᵢₙ vaut environ 30 % du diamètre externe de la partie basse de la manchette 36.

Si l'on considère que le secteur amont 56 correspond à la moitié du bord périphérique 53 tournée vers l'amont de la tuyauterie primaire 30 et que le secteur aval 58 correspond à la moitié du bord périphérique 53 tournée vers l'aval de la tuyauterie primaire 30, la pénétration moyenne du secteur amont 56 est dans ce cas supérieure d'environ 15 % à la pénétration moyenne du secteur aval 58.

Le bord périphérique 53 peut présenter d'autres profils, par exemple un profil en créneau tel que celui représenté sur la figure 4. Les secteurs amont 56 et aval 58 de ce bord couvrent chacun la moitié de la périphérie du bord. Chacun des secteurs présente une pénétration sensiblement constante, la différence de pénétration entre le secteur amont 56 et le secteur aval 58 valant ici 25 % environ du diamètre externe de la manchette 36.

Le bord périphérique 53 peut présenter de multiples autres profils. De préférence, le secteur amont 56 s'étend sur au moins 30 % de la périphérie du bord libre 53.

De préférence également, la profondeur moyenne de pénétration du secteur amont 56 est supérieure à la profondeur moyenne de pénétration du secteur aval 58 d'au moins 10 % de la plus grande dimension de la section droite de la tuyauterie de charge 26, correspondant ici au diamètre interne de la tuyauterie de charge 26.

De préférence également, la profondeur de pénétration moyenne du secteur amont 56 est supérieure à 50 % de la plus grande dimension de la section droite de la manchette 36 au niveau de son extrémité libre 52, correspondant ici au diamètre interne de la manchette 36.

Selon un autre aspect facultatif de l'invention, visible sur la figure 2, la manchette 36 comprend, à partir de sa première extrémité 50, un tronçon convergent 60 formant restriction, puis un étranglement 62 de section interne constante se prolongeant jusqu'à la seconde extrémité 52. Le diamètre interne de la manchette 36 se réduit progressivement le long du tronçon convergent 60. Au niveau de la première extrémité 50, le diamètre interne de la manchette 36 est égal au diamètre interne de la partie principale 40. Le rapport entre le diamètre de la tuyauterie 26, pris au niveau de sa partie principale 40, et la plus grande dimension de la section interne de l'étranglement 62, ici son diamètre interne, est compris entre 1,7 et 3.

Le circuit primaire décrit ci-dessus présente de multiples avantages.

Lors de l'injection d'une charge de liquide à l'intérieur de la tuyauterie primaire 30 via la tuyauterie de charge 26, le secteur amont 56 du bord libre de la manchette empêche que le liquide primaire chaud remonte à l'intérieur de la manchette 36.

En effet, ce secteur amont 56 pénètre plus profondément que le reste du bord périphérique 53 dans le volume intérieur 32 de la tuyauterie primaire.

En l'absence d'un tel secteur, de petits vortex de liquide primaire chaud pourraient remonter à l'intérieur de la manchette 36, en particulier quand le débit de liquide à travers la tuyauterie de charge 26 et la manchette 36 est faible. Le secteur amont 56 du bord périphérique 53 dévie ces petits vortex vers le centre de la tuyauterie primaire 30, limitant ainsi les risques que ces petits vortex pénètrent à l'intérieur de la manchette 36.

Les parties de la tuyauterie de charge 26 maintenues plus froides par la charge de liquide injectée dans la tuyauterie primaire ne sont pas exposées à des petits vortex de liquides chauds remontant de la tuyauterie primaire.

Elles ne subissent donc pas de cycles thermiques et ne sont pas exposés aux sollicitations qui en résultent. Le risque de fuite à terme au niveau du piquage de la tuyauterie de charge 26 est, en conséquence, diminué.

Par ailleurs, la manchette 36 pénètre profondément à l'intérieur de la tuyauterie primaire 30 sur une profondeur supérieure à 50% de la plus grande dimension de la section droite de la manchette au niveau de son extrémité libre. Ceci a pour effet d'écarter la zone de mélange entre le fluide injecté et le fluide primaire vers le centre de la tuyauterie 30. La partie de la tuyauterie primaire 30 située au droit de la zone de mélange y compris le piquage 34, subit de ce fait des variations de température de moindre amplitude.

Le fait que la manchette 36 comporte un étranglement 62 de section de passage plus petite que celle de la tuyauterie annexe 26 permet d'accélérer le fluide injecté à l'intérieur de la tuyauterie primaire. La vitesse du fluide contribue à écarter encore plus la zone de mélange loin de la paroi de la tuyauterie primaire et du piquage.

Par ailleurs, le fait de former le tronçon convergent 60 de la manchette au niveau de la première extrémité 50 de cette manchette, c'est-à-dire au niveau où la manchette 36 se raccorde sur la tuyauterie de charge 26, permet de créer une paroi périphérique de forte épaisseur à cet endroit, comme le montre la figure 2. Ceci permet avantageusement d'augmenter la résistance mécanique de la liaison entre la manchette 36 et la tuyauterie de charge 26. En effet, la circulation du fluide primaire dans la tuyauterie 30 crée des vibrations de la manchette 36, en particulier du fait que cette manchette pénètre profondément à l'intérieur de la tuyauterie primaire 30. Ces vibrations se propagent de l'extrémité libre 52 de la manchette 36 jusqu'au point de jonction entre la manchette 36 et la tuyauterie de charge 26. Augmenter l'épaisseur de matière à l'endroit de la liaison permet donc d'améliorer la tenue aux vibrations à cet endroit, et ainsi d'augmenter la durée de vie de la manchette 36, et de la tuyauterie de charge 26, et du piquage 34.

On a décrit ci-dessus la structure de la zone d'interface entre la tuyauterie de charge 26 connectée au circuit RCV et la tuyauterie primaire 30. Cette structure peut être avantageusement transposée à l'interface entre la tuyauterie 22 et la branche chaude 16 du circuit primaire. Comme on l'a vu précédemment, la tuyauterie 22 met en communication l'enveloppe 21 du pressuriseur et la branche chaude 16 du circuit. Le mélange entre le fluide très chaud arrivant, dans certains cas, du pressuriseur 8 et le fluide primaire circulant dans la branche chaude 16 crée des sollicitations thermiques au niveau du piquage de la tuyauterie 22 sur la branche chaude 16. L'utilisation d'une manchette 36 telle que décrite ci-dessus permet d'améliorer le comportement thermique et mécanique au niveau du piquage de la tuyauterie 22.

Le circuit primaire décrit ci-dessus peut présenter de multiples variantes.

La manchette 36 peut ne pas présenter une section interne circulaire mais plutôt ovale, ou toute autre forme. Le tronçon convergent 60 formant restriction peut ne pas être disposé à la première extrémité 50 de la manchette, mais être décalé vers la seconde extrémité 52 à n'importe quel point de cette manchette. La manchette 36 peut également ne pas comprendre de tronçon convergent 60.

On a représenté, sur la figure 2, la tuyauterie de charge 26 et la manchette 36 s'étendant perpendiculairement par rapport à l'axe central C' de la tuyauterie primaire 30. La tuyauterie 26, le piquage 34 et la manchette 36 pourraient aussi être inclinées par rapport à l'axe central C' de la tuyauterie 30.

## Revendications

1. Circuit primaire (10) de réacteur nucléaire, comprenant
- une tuyauterie primaire (30) délimitant un volume intérieur (32) dans lequel circule un fluide primaire de refroidissement du réacteur nucléaire, ledit fluide primaire circulant de l'amont vers l'aval de la tuyauterie primaire (30);
- une tuyauterie annexe (26) piquée sur la tuyauterie primaire (30), la tuyauterie annexe (26) délimitant un volume interne communiquant avec le volume intérieur (32) de la tuyauterie primaire (30) ;
- une manchette (36) présentant une première extrémité (50) liée à la tuyauterie annexe (26), et une seconde extrémité libre ouverte (52) située dans le volume intérieur (32) de la tuyauterie primaire (30) ;
**caractérisé en ce que** la seconde extrémité (52) de la manchette (36) est délimitée par un bord périphérique libre (53) présentant des secteurs amont et aval (56, 58) tournés respectivement vers l'amont et l'aval de la tuyauterie primaire (30), le secteur amont (56) pénétrant plus profondément dans le volume intérieur (32) à partir de la tuyauterie primaire (30) que le secteur aval (58).

2. Circuit selon la revendication 1, **caractérisé en ce que** les secteurs amont et aval (56, 58) pénètrent dans le volume intérieur (32) respectivement sur des première et seconde profondeurs moyennes de pénétration, la première profondeur étant supérieure à la seconde d'au moins 10% de la plus grande dimension de la section droite de la tuyauterie annexe (26).

3. Circuit selon la revendication 2, **caractérisé en ce que** la première profondeur moyenne de pénétration est supérieure à 50% de la plus grande dimension de la section droite de la manchette (36) au niveau de son extrémité libre (52).

4. Circuit selon l'une quelconque des revendications 1 à 3, **caractérisé en ce que** le bord périphérique (53) présente un profil en biseau.

5. Circuit selon l'une quelconque des revendications 1 à 3, **caractérisé en ce que** le bord périphérique (53) présente un profil en créneau.

6. Circuit selon l'une quelconque des revendications précédentes, **caractérisé en ce que** le secteur amont (56) s'étend sur au moins 30% du bord périphérique (53).

7. Circuit selon l'une quelconque des revendications précédentes, **caractérisé en ce que** la manchette (36) comprend un étranglement (62) se terminant par l'extrémité libre (52), l'étranglement (62) présentant une section de passage plus petite que celle de la tuyauterie annexe (26).

8. Circuit selon la revendication 7, **caractérisé en ce que** l'étranglement (62) s'étend entre une restriction (60) formée dans la manchette (36) et la seconde extrémité libre (52), la restriction (60) étant ménagée dans la zone de raccordement de la manchette (36) sur la tuyauterie annexe (26).

9. Circuit selon la revendication 7 ou 8, **caractérisé en ce que** la plus grande dimension de la section de passage de la tuyauterie annexe (26) est comprise entre 1,7 et 3 fois la plus grande dimension de la section de passage de l'étranglement (62).

10. Réacteur nucléaire à eau pressurisée, comprenant
- une cuve (2) destinée à contenir des assemblages de combustible nucléaire, cette cuve (2) étant pourvue d'au moins une entrée (12) et une sortie (14),
- un circuit primaire (10) comprenant au moins une branche froide (20) connectée à l'entrée (12) de la cuve (2) et une branche chaude (16) connectée à la sortie (14) de la cuve (2),
**caractérisé en ce que** le circuit primaire (10) est un circuit primaire selon l'une quelconque des revendications précédentes.

11. Réacteur selon la revendication 10, **caractérisé en ce que** la tuyauterie annexe (26) est connectée à un circuit (24) apte à injecter une charge de liquide dans la tuyauterie primaire (30) par ladite tuyauterie annexe (26), la tuyauterie annexe (26) étant piquée dans la branche froide (20) du circuit primaire (10).

12. Réacteur selon la revendication 10, **caractérisé en ce qu'**il comprend un pressuriseur (8) apte à faire varier de manière contrôlée la pression du fluide primaire dans le circuit primaire (10), la tuyauterie annexe (26) mettant en communication le pressuriseur (8) et la tuyauterie primaire (30) et étant piquée sur la branche chaude (16) du circuit primaire (10).

## Claims

1. Nuclear reactor primary coolant system (10), comprising:
- a primary coolant pipe (30) which delimits an inner space (32) in which a primary cooling fluid of the nuclear reactor flows, the primary cooling fluid flowing from the upstream direction in a downstream direction of the primary coolant pipe (30);
- an additional pipe (26) which is tapped from the primary coolant pipe (30), the additional pipe (26) delimiting an inner space which communicates with the inner space (32) of the primary coolant pipe (30);
- a sleeve (36) which has a first end (50) which is connected to the additional pipe (26), and a second free end (52) which is located in the inner space (32) of the primary coolant pipe (30) ;
**characterised in that** the second end (52) of the sleeve (36) is delimited by a free peripheral edge (53) which has at least upstream and downstream sectors (56, 58) which are directed in the upstream and downstream direction of the primary coolant pipe (30), respectively, the upstream sector (56) penetrating more deeply into the inner space (32) from the primary coolant pipe (30) than the downstream sector (58).

2. System according to claim 1, **characterised in that** the upstream and downstream sectors (56, 58) penetrate into the inner space (32) over first and second mean penetration depths, respectively, the first depth being greater than the second by at least 10% of the largest dimension of the cross section of the additional pipe (26).

3. System according to claim 2, **characterised in that** the first mean penetration depth is greater than 50% of the largest dimension of the cross section of the sleeve (36) in the region of the free end (52) thereof.

4. System according to many one of claims 1 to 3, **characterised in that** the peripheral edge (53) has a bevelled profile.

5. System according to any one of claims 1 to 3, **characterised in that** the peripheral edge (53) has a notched profile.

6. System according to any one of the preceding claims, **characterised in that** the upstream sector (56) extends over at least 30% of the peripheral edge (53).

7. System according to any one of the preceding claims, **characterised in that** the sleeve (36) comprises a contraction (62) which terminates at the free end (52), the contraction (62) having a smaller flow cross-section than that of the additional pipe (26).

8. Circuit according to claim 7, **characterised in that** the contraction (62) extends between a restriction (60) which is formed in the sleeve (36) and the second free end (52), the restriction (60) being arranged in the connection zone of the sleeve (36) to the additional pipe (26).

9. System according to claim 7 or 8, **characterised in that** the largest dimension of the flow cross-section of the additional pipe (26) is between 1.7 and 3 times the largest dimension of the flow cross-section of the contraction (62).

10. Pressurised water nuclear reactor which comprises:
- a vessel (2) which is intended to contain, nuclear fuel assemblies, this vessel (2) being provided with at least an inlet (12) and an outlet (14),
- a primary coolant system (10) which comprises at least a cold branch (20) which is connected to the inlet (12) of the vessel (2) and a hot branch (16) which is connected to the outlet (14) of the vessel (2),
**characterised in that** the primary coolant System (10) is a coolant system according to any one of the preceding claims.

11. Reactor according to claim 10, **characterised in that** the additional pipe (26) is connected to a system (24) which is capable of injecting a charge of liquid into the primary coolant pipe (30) via the additional pipe (26), the additional pipe (26) being tapped from the cold branch (20) of the primary coolant system (10),

12. Reactor according to claim 10, **characterised in that** it comprises a pressuriser (8) which is capable of varying in a controlled manner the pressure of the primary cooling fluid in the primary coolant system (10), the additional pipe (26) placing the pressuriser (8) and the primary coolant pipe (30) in communication and being tapped from the hot branch (16) of the primary coolant system (10).

## Patentansprüche

1. Primärkreislauf (10) eines Kernreaktors, aufweisend;
- eine Primärrohrleitung (30), die ein Innenvolumen (32) begrenzt, in dem eine Primärflüssigkeit zum Kühlen des Kernreaktors zirkuliert, wobei die Primärflüssigkeit von der Stromaufwärtsseite zu der Stromabwärtsseite der Primärrohrleitung (30) zirkuliert,
- eine Nebenrohrleitung (26), die an die Primärrohrleitung (30) angeschlossen ist, wobei die Nebenrohrleitung (26) ein Innenvolumen begrenzt, das mit dem Innenvolumen (32) der Primärrohrleitung (30) kommuniziert,
- eine Manschette (36), die ein mit der Nebenrohrleitung (26) verbundenes erstes Ende (50) und ein in dem Innenvolumen (32) der Primärrohrleitung (30) angeordnetes zweites freies offenes Ende (52) aufweist,
**dadurch gekennzeichnet, dass** das zweite Ende (52) der Manschette (36) von einem freien Umfangsrand (53) begrenzt wird, der einen Stromaufwärts- und einen Stromabwärtsbereich (56, 58) aufweist, die in Richtung zu der Stromaufwärtsseite bzw. der Stromabwärtsseite der Primärrchrleitung (30) ausgerichtet sind, wobei der Stromaufwärtsbereich (56) von der Primärrohrleitung (30) aus tiefer in das Innenvolumen (32) einbringt als der Stromabwärtsbereich (58).

2. Kreislauf gemäß Anspruch 1, **dadurch gekennzeichnet, dass** der Stromaufwärts- und der Stromabwärtsbereich (56, 58) mit einer ersten bzw. einer zweiten mittleren Einbringtiefe in das Innenvolumen (32) eindringen, wobei die erste Tiefe um mindestens 10% der größten Abmessung des Querschnitts der Nebenrohrleitung (26) größer als die zweite ist.

3. Kreislauf gemäß Anspruch 2, **dadurch gekennzeichnet, dass** die erste mittlere Eindringtiefe größer als 50% der größten Abmessung des Querschnitts der Manschette (36) auf Höhe ihres freien Endes (52) ist.

4. Kreislauf gemäß einem der Ansprüche 1 bis 3, **dadurch gekennzeichnet, dass** der Umfangsrand (53) ein abgeschrägtes Profil aufweist.

5. Kreislauf gemäß einem der Ansprüche 1 bis 3, **dadurch gekennzeichnet, dass** der Umfangsrand (53) ein Zackenprofil aufweist.

6. Kreislauf gemäß einem der vorhergehenden Ansprüche,
**dadurch gekennzeichnet, dass** sich der Stromaufwärtsbereich (56) über mindestens 30% des Umfangsrandes (53) hin erstreckt.

7. Kreislauf gemäß einem der vorhergehenden Ansprüche,
**dadurch gekennzeichnet, dass** die Manschette (36) eine Verengung (62) aufweist, die an dem freien Ende (52) endet, wobei die Verengung (62) einen kleineren Durchgangsquerschnitt als die Nebenrohrleitung (26) aufweist.

8. Kreislauf gemäß Anspruch 7, **dadurch gekennzeichnet, dass** sich die Verengung (62) zwischen einer in der Manschette (36) ausgebildeten Reduzierung (60) und dem zweiten freien Ende (52) erstreckt, wobei die Reduzierung (60) in dem Anschlussbereich der Manschette (36) an die Nebenrohrleitung (26) vorgesehen ist.

9. Kreislauf gemäß Anspruch 7 oder 8, **dadurch gekennzeichnet, dass** die größte Abmessung des Durchgangsguerschnitts der Nebenrohrleitung (26) zwischen dem 1,7- und 3 fachen der größten Abmessung des Durchgangsquerschnitts der Verengung (62) liegt.

10. Druckwasserkernreaktor, aufweisend:
- einen Behälter (2), der vorgesehen ist, um Brennelementbündel aufzunehmen, wobei der Behälter (2) mindestens einen Eingang (12) und einen Ausgang (14) aufweist,
- einen Primärkreislauf (10), der mindestens einen mit dem Eingang (12) des Behälters (2) verbundenen kalten Strang (20) und einen mit dem Ausgang (14) des Behälters (2) verbunden heißen Strang (16) aufweist,
**dadurch gekennzeichnet, dass** der Primärkreislauf (10) ein Primärkreislauf gemäß einem der vorhergehenden Ansprüche ist.

11. Reaktor gemäß Anspruch 10, **dadurch gekennzeichnet, dass** die Nebenrohrleitung (26) mit einem Kreislauf (24) verbunden ist, der geeignet ist, eine Ladung Flüssigkeit durch die Nebenrohrleitung (26) in die Primärrohrleitung (30) einzuspritzen, wobei die Nebenrohrleiturg (26) an den kalten Strang (20) des Primarkreislaufs (10) angeschlossen ist.

12. Reaktor gemäß Anspruch 10, **dadurch gekennzeichnet, dass** er einen Druckhalter (8) aufweist, der geeignet ist, den Druck der Primärflüssigkeit in dem Primärkreislauf (10) auf kontrollierte Weise zu variieren, wobei die Nebenrohrleitung (26) den Druckhalter (8) und die Primärrohrleitung (30) miteinander in Verbindung bringt und an den heißen Strang (16) des Primärkreislaufs (10) angeschlossen ist.
